(19) **Europäisches Patentamt**
**European Patent Office**
**Office européen des brevets**

(11) **EP 2 455 782 A1**

(12) **EUROPEAN PATENT APPLICATION**

(43) Date of publication:
**23.05.2012 Bulletin 2012/21**

(51) Int Cl.:
**G02B 3/00** (2006.01)

(21) Application number: **11189181.8**

(22) Date of filing: **15.11.2011**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **17.11.2010 KR 20100114426**

(71) Applicant: **Lee, Joo Hyun**
**Seoul (KR)**

(72) Inventor: **Lee, Joo Hyun**
**Seoul (KR)**

(74) Representative: **Neobard, William John**
**Kilburn & Strode LLP**
**20 Red Lion Street**
**London WC1R 4PJ (GB)**

(54) **Lens array sheet**

(57)    A lens array sheet (50) formed with a light transmission control filter includes a lens array layer having a configuration in which convex lenses (49) and light transmission control filters (45) are repeatedly arrayed; a focal distance layer (47) formed under the lens array layer; and a three-dimensional layer (52) formed under the focal distance layer (47).

Fig. 4

EP 2 455 782 A1

**Description**

The present invention relates to the general field of lenses and more particularly but not exclusively to a lens array sheet. Embodiments relate to a lens array sheet formed with a light transmission control filter, in which a filter for controlling light transmission is formed between convex lens arrays, thereby improving clearness of a three-dimensional image.

Lens array sheets are used in various fields. Representatively, lens array sheets are applied to a liquid crystal display, a three-dimensional display, a surface light source device, a back light unit, a lens array sheet for three-dimensional printing, etc.

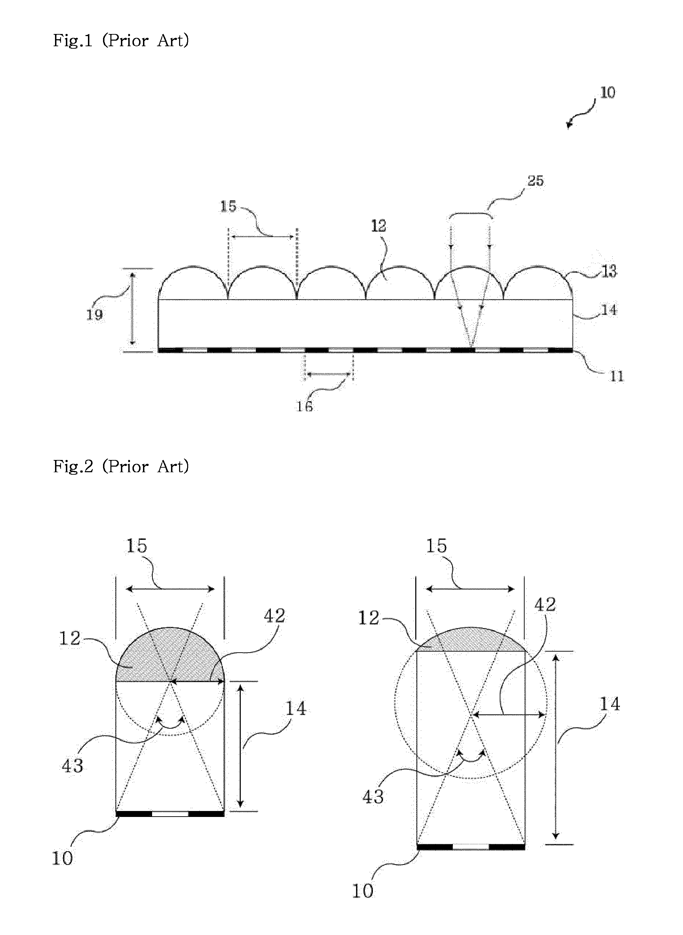

FIG. 1 is a view illustrating the structure of a conventional lens array sheet for three-dimensional printing.

Referring to FIG. 1, a lens array sheet 10 for three-dimensional printing includes a lens array layer 13 in which convex lenses 12 with a hemispherical, square pyramidal or hexagonal pyramidal shape and a predetermined radius of curvature are arranged in arrays, a focal distance layer 14 which is formed under the lens array layer 13 and appropriately defines a focal distance in correspondence to a radius of curvature of the lenses 12, and a three-dimensional layer 11 which is formed under the focal distance layer 14 and on which a three-dimensional image is produced.

FIG. 2 is a view explaining relationships among a pitch of a lens, a radius of curvature of the lens, and a thickness of the lens array sheet in the conventional lens array sheet for three-dimensional printing.

Referring to FIG. 2, in the relationships among a pitch 15 of a lens, a radius of curvature 42 of the lens, and a thickness of the lens array sheet, an angel of view 43 is determined by the size of the radius of curvature 42 of the lens, and a focal distance 14 for realizing a three-dimensional image is determined by the angle of view 43.

Accordingly, the focal distance layer 14 becomes thick as a refractive index of a lens medium is low and the radius of curvature 42 of the individual lens is large. Due to this fact, an overall thickness 19 of the lens array sheet increases. Conversely, the focal distance layer 14 for realizing a three-dimensional image becomes thin as the refractive index of the lens medium itself is high and the radius of curvature 42 of the individual lens is small. Due to this fact, the overall thickness 19 of the lens array sheet decreases.

While a transparency of the lens array sheet preferably increases as the lens array sheet is thin, the radius of curvature 42 of the lens should be decreased in order to ensure that a three-dimensional image is appropriately produced on the thin lens array sheet.

The following mathematical equations 1 through 4 represent the relationships among the pitch 15 of the lens, the radius of curvature 42 of the lens, and the overall thickness 19 of the lens array sheet.

[Mathematical Equation 1]

$$d = r - \sqrt{r^2 - (\frac{p}{2})^2}$$

[Mathematical Equation 2]

$$p = 2\sqrt{2dr - d^2}$$

[Mathematical Equation 3]

$$r = \frac{(\frac{p}{2})^2 + d^2}{2d}$$

[Mathematical Equation 4]

$$t \cong \frac{n}{n-1}r$$

Here, r is the radius of curvature, p is the pitch of the lens, d is a depth of an embossed portion of the lens, t is the overall thickness of the lens array sheet, and n is a refractive index.

It can be readily understood from the mathematical equations 1 through 4 that the thickness of the lens array sheet preferably decreases as the radius of curvature 42 is small. However, because a minimum radius of curvature is determined depending upon the pitch 15 of the lens, it is impossible to optionally decrease the thickness of the lens array sheet.

For example, in the case of a lens array sheet constituted by 70 lenses per inch, the minimum radius of curvature 42 becomes 0.1814 mm. If convex lenses with a decreased radius of curvature 42 are formed by neglecting the above-described theorem, gaps 20 cannot help but be formed between the lenses. In this case, directional light 37 which passes through the gaps 20 serves as a factor which hinders focusing implemented through refraction by the convex lenses 13 so that the three-dimensional layer 11 may be viewed unclearly or in an extreme case no three-dimensional effect may be felt.

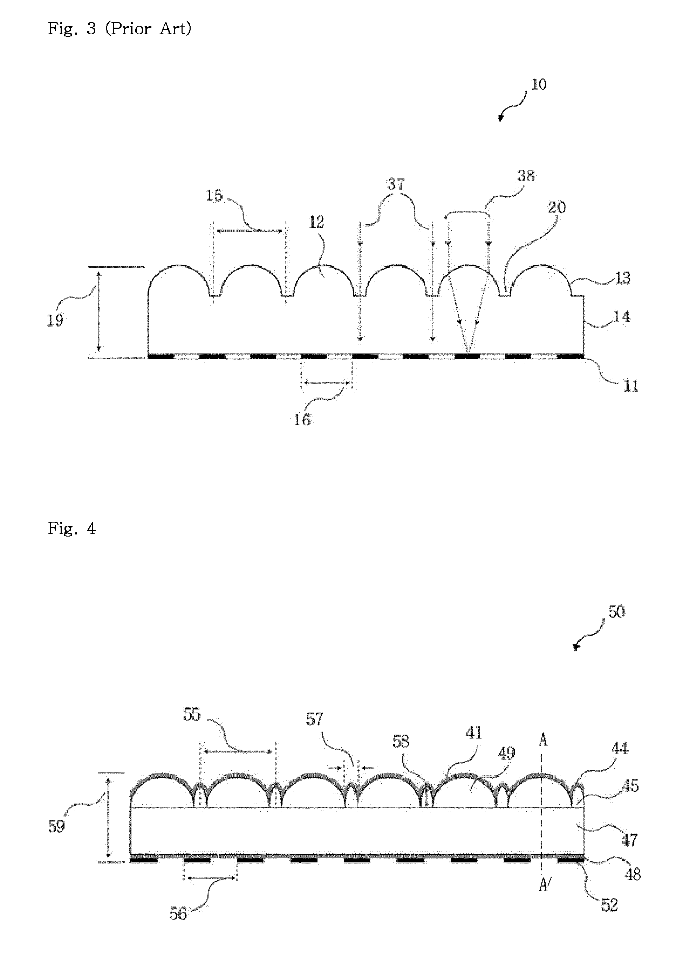

FIG. 3 is a view explaining the problem caused when a radius of curvature of a lens is decreased in the conventional lens array sheet for three-dimensional printing.

Referring to FIG. 3, as described above, in order to decrease a focal distance, lenses should be made to have a small radius of curvature. However, in this case, gaps, through which incident light not having passed through the lenses passes, cannot help but be defined, that is, transparent portions 20 cannot help but be formed between the lenses. As a consequence, the light 37 which passes through the transparent portions 20 and light 38 which passes through the lenses are mixedly focused on the three-dimensional layer 11. In this case, the volume, color, brightness, saturation and sharpness of a three-dimensional image may be markedly degraded, by which a high quality three-dimensional image cannot be provided.

Where the various layers of the lens array sheet for three-dimensional printing are formed into a single resin layer, there are advantages and disadvantages inherent to each resin material.

For example, in the case of PP (polypropylene), the price is low, but transparency, adhesiveness and printability are degraded. In the case of A-PET (polyethylene terephthalate), transparency, refractive index and dimensional stability are high, and but adhesiveness and printability are degraded. Further, in the case of PET-G, transparency, refractive index and dimensional stability are high, printability is good, but the price is high.

An aim of embodiments is to provide a lens sheet which appropriately eliminates transparent portions in a lens array with a decreased radius of curvature and has a light transmission control filter.

Another aim is to provide a lens sheet which is formed as a composite resin layer by using different materials, thereby improving the clearness and the volume of a three-dimensional image.

In one aspect, there is provided a lens array sheet formed with a light transmission control filter, including: a lens array layer having a configuration in which convex lenses and light transmission control filters are repeatedly arrayed; a focal distance layer formed under the lens array layer; and a three-dimensional layer formed under the focal distance layer.

In the lens array sheet the light transmission control filters may have a size that is smaller than the convex lenses.

The three-dimensional layer may have patterns which are formed through printing.

The three-dimensional layer may be formed with embossing patterns when the lens array layer and the focal distance layer are simultaneously extruded.

A pitch of the patterns formed through printing may be smaller than a pitch of the convex lenses.

A pitch of the embossing patterns may be smaller than the pitch of the convex lenses.

The light transmission control filters may have oval spherical surfaces.

The convex lenses may have oval spherical surfaces.

An adhesive surface coating agent may be applied over the lens array layer.

An adhesive surface coating agent may be applied over the lens array layer. It may be planarized.

A coating layer for absorbing ink may be added over the lens array layer.

The light transmission control filters may have an aspherical, triangular or polygonal sectional shape.

The focal distance layer may be constituted by a first focal distance layer and a second focal distance layer which is formed under the first focal distance layer.

The convex lenses of the lens array layer may be constituted by first convex lenses and second convex lenses which are formed under the first convex lenses in such a way as to overlap with each other.

The light transmission control filters of the lens array layer may be constituted by first light transmission control filters and second light transmission control filters which are formed under the first light transmission control filters in such a way as to overlap with each other.

A refractive index of the first convex lenses may be equal to or larger than a refractive index of the second convex lenses.

The light transmission control filters may be formed in a continuous shape in such a way as not to have a pitch in one of longitudinal and transverse directions when viewed from the top.

In the drawings:

FIG. 1 is a view illustrating the structure of a conventional lens array sheet for three-dimensional printing;
FIG. 2 is a view explaining relationships among a pitch of a lens, a radius of curvature of the lens, and a thickness of the lens array sheet in the conventional lens array sheet for three-dimensional printing;
FIG. 3 is a view explaining a problem caused when a radius of curvature of a lens is decreased in the conventional lens array sheet for three-dimensional printing;
FIG. 4 is a view illustrating a lens array sheet formed with a light transmission control filter of a first embodiment;
FIG. 5 is a view illustrating a lens array sheet formed with a light transmission control filter of a second embodiment;
FIG. 6 is a cross-sectional view taken along the line A-A' in the lens array sheet formed with a light transmission control filter;
FIG. 7 is a view illustrating a lens array sheet formed with a light transmission control filter of a third embodiment;
FIG. 8 is a view illustrating a lens array sheet formed with a light transmission control filter of a fourth embodiment;
FIG. 9 is a view comparing a radius of curvature of a lens and a thickness of a lens sheet;
FIG. 10 is a view comparing a focal position of a lens and a thickness of a lens sheet in a spherical lens and an aspherical lens;

FIG. 11 is a view illustrating various sectional shapes of a light transmission control filter; and

FIG. 12 is a perspective view illustrating the construction of the lens array sheet formed with a light transmission control filter.

Referring to FIG. 4, a lens array sheet 50 formed with a light transmission control filter of a first embodiment includes a lens array layer (not numbered) in which convex lenses 49 and light transmission control filters 45 are repeatedly arrayed, a focal distance layer 47 which is formed under the lens array layer, and a three-dimensional layer 52 which is formed under the focal distance layer 47.

The respective layers are formed using resin-based materials. The respective layers may be formed using the same resin or different resins. Each layer may be formed as a composite layer using different resin materials.

For example, by depositing on the convex lenses 49 a resin layer 41 made of a material different from that of the convex lenses 49, a composite layer 41 and 49 may be constituted. Also, by depositing on the focal distance layer 47 another layer 48 made of a resin material different from that of the focal distance layer 47, a composite layer 47 and 48 may be constituted. Moreover, since a composite layer 44 and 45 may be constituted in the case of the light transmission control filters 45, detailed description thereof will be omitted herein.

The lens array layer composed of the composite layer 41 and 49 provides various advantages. When the material of the composite layer is selected among resins such as A-PET, PET-G, PP, PVC, acryl, PC, PS and so forth and the respective layers of the composite layer are formed of different materials selected among these resins, advantages of the respective resins can be provided. For example, if the upper layer 41 is formed of A-PET (polyethylene terephthalate) and the lower layer 49 is formed of PET-G, the composite layer 41 and 49 can simultaneously provide the advantages of A-PET such as high transparency, high refractive index, dimensional stability and low price and the advantages of the PET-G such as printability. Such a combination of resins is exemplarily provided, and it is to be noted that the present invention is not limited by any combinations of resins.

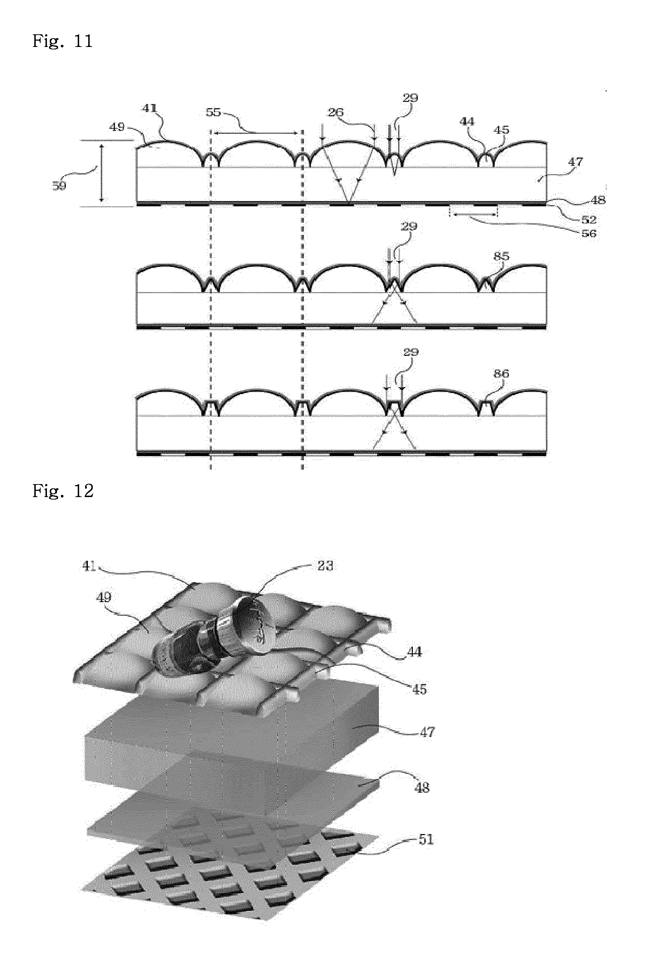

While not shown in a drawing, when viewed from the top, the light transmission control filters 45 as one of the characterizing features of the present invention are separated from one another by a unit pitch 55 of the lenses in one of longitudinal and transverse directions, and are not separated from one another and are continuously formed in line-like shapes in the other of the longitudinal and transverse directions. Thus, the light transmission control filters 45 may have a sectional shape of an oval 45, a triangle 85 or a polygon 86 as shown in FIG. 11 in the one of the longitudinal and transverse directions, and may not have a sectional shape of an oval 45, a triangle 85 or a polygon 86 in the other of the longitudinal and transverse directions.

Since the unit size of the light transmission control filters 45 is smaller than the unit size of the convex lens 49, the light, which is refracted through the light transmission control filters 45, is focused, diffracted and scattered before reaching the three-dimensional layer 52. Due to this fact, since only the light, which is refracted through the convex lenses 49, is precisely focused on the three-dimensional layer 52, the depth, color, brightness, saturation and sharpness of a subject 23 (see FIG. 12) can be improved when the subject 23 is imaged.

As a result of experiments conducted by the inventors in relation to the first embodiment, it was found that a preferred lens sheet is manufactured when the first convex lenses 41 and the first light transmission control filter layer 44 are formed of PET-G resin with refractive index of 1.575, the unit pitch 55 of the convex lens is set to 363 microns, a lens arrangement angle is set to 45°, a radius of curvature is set to 150 microns, a width 57 of the first light transmission control filter layer 44 is set to 63 microns, the height of embossed portions 58 is set to 50 microns, and the second convex lenses 49 and the second light transmission control filters 45 are formed of A-PET resin with refractive index of 1.575.

As a result, due to the presence of the light transmission control filters 44 and 45 which are formed between the convex lenses 41 and 49, the convex lenses 41 and 49 of the first embodiment can be designed to have a radius of curvature of 150 microns that is smaller than 181 microns as a minimum radius of curvature of conventional spherical lenses, and it is possible to manufacture a micro lens array sheet for three-dimensional look which has a thickness 59 of a lens array sheet 50 corresponding to 411 microns.

In all embodiments, three-dimensional patterns of three-dimensional layers 51 and 52 can be arranged by controlling an interval within the ranges of 90%~99.95% and 100.05%~110% in the same manner in which the convex lenses 41 and 49 are arrayed. As a consequence, a printed three-dimensional image or an embossed three-dimensional image can be viewed through binocular disparity.

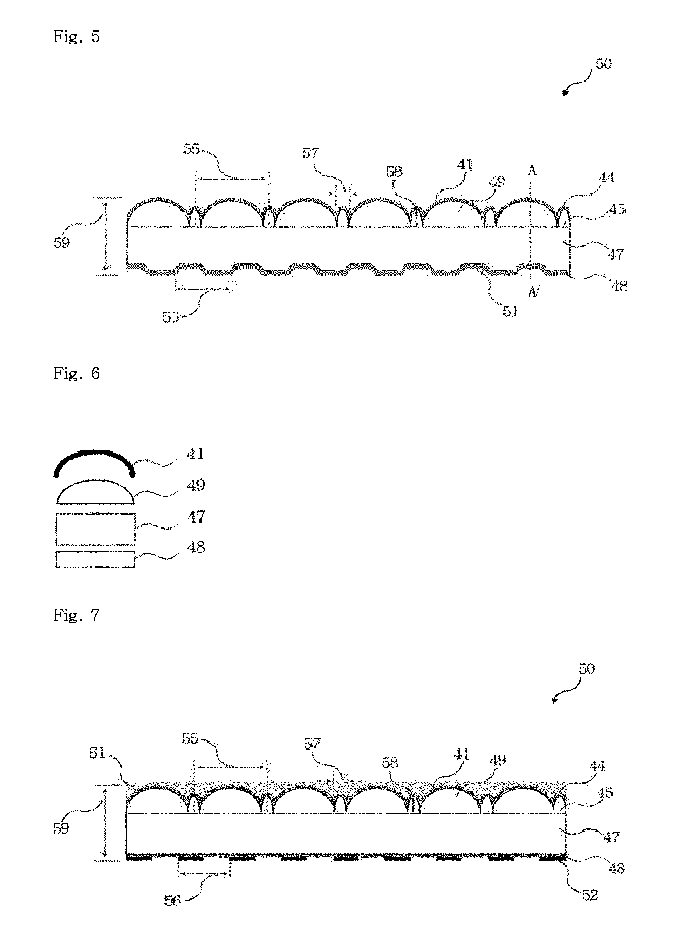

Referring to FIG. 5, in a lens array sheet formed with a light transmission control filter of the second embodiment, a three-dimensional layer 51 has an embossing shape. While the three-dimensional patterns of the three-dimensional layer 52 shown in FIG. 4 of the first embodiment is formed through printing after the lens sheet is manufactured, the three-dimensional layer 51 of the second embodiment can be formed simultaneously when the lens array layers 41 and 49 and the focal distance layers 47 and 48 are formed through extrusion. Due to this fact, additional advantages are provided in that a manufacturing procedure can be simplified.

As a result of experiments conducted by the inventors in relation to the second embodiment, it was found that an advantageous lens sheet can be manufactured when the first convex lenses 41 and the first light transmission control filter layer 44 are formed of PET-G resin with refractive index of 1.575, a lens arrangement angle is set to 45°, a radius of curvature is set to 100 microns, the width 57 of the first light transmission control filter layer 44 is set to 30 microns, the height of embossed portions 58 is set to 25 microns, and the second convex lenses 49 and the second light transmission control filters 45 are formed of A-PET resin with refractive index of 1.575. It was found that it is preferable to print the embossing patterns of the three-dimensional layer 51 to have a size smaller by 1.0% than the pitch of the lenses.

As a result, due to the presence of the light transmission control filters 44 and 45 which are formed between the convex lenses 41 and 49, the convex lenses 41 and 49 of the second embodiment can be designed to have a radius of curvature of 100 microns that is smaller than 115 microns as a minimum radius of curvature of conventional spherical lenses, and it is possible to manufacture a micro lens array sheet for three-dimensional look which has the thickness 59 of the lens array sheet 50 corresponding to 272 microns and does not require a separate process for printing three-dimensional patterns.

Referring to FIG. 7, a lens array sheet formed with a light transmission control filter of the third embodiment is characterized in that a transparent adhesive coating layer 61 is applied over a lens array layer such that the upper part of a lens sheet is planarized.

As a result of experiments conducted by the inventors in relation to the third embodiment, it was found that, when a first convex lens layer 41 is designed to be formed of PET-G resin with refractive index of 1.575 and have a unit pitch 55 of lenses corresponding to 339 microns, a lens arrangement angle of 45° and a radius of curvature corresponding to 140 microns, a first light transmission control filter layer 44 is designed to have a width of 58 microns and the height of embossed portions corresponding to 40 microns, and a second convex lens layer 49 and the second light transmission control filter layer 45 are designed to be formed of A-PET resin with a refractive index of 1.575, a thickness of a lens array sheet for three-dimensional look corresponding to 1260 microns is achieved through calculation using the following mathematical equation 5.

[Mathematical Equation 5]

$$f_1 \cong \frac{n_2 r}{n_2 - n_1}$$

Here, $f_1$ is the thickness of the focal distance layer, r is the radius of the lens, $n_1$ is the refractive index of the coating layer, and $n_2$ is the refractive index of the convex lenses.

By processing the lower end portion of a second focal distance layer 48 to have a pitch 56 of three-dimensional printing patterns that is smaller by 1.8% than the unit pitch of the lenses, arranging the three-dimensional printing patterns at the same angle as the overlapped convex lenses 41 and 49, and then performing printing with a high precision, it is possible to manufacture a compositely stacked lens sheet for three-dimensional look as shown in FIG. 7, in which a lens sheet and printed patterns are integrated and the surfaces of the lenses are planarized.

As a result, due to the presence of the light transmission control filters 44 and 45 which are formed between the convex lenses 41 and 49, the convex lenses 41 and 49 of the third embodiment can be designed to have a radius of curvature of 140 microns that is smaller than 169 microns as a minimum radius of curvature of conventional spherical lenses, and it is possible to manufacture a micro lens array sheet for three-dimensional look which has the thickness 59 of the lens array sheet 50 corresponding to 1260 microns and is planarized in the surface thereof.

In addition, in the course of applying and setting an adhesive coating agent with a refractive index smaller than that of the surfaces of the first convex lens layer 41 and the light transmission control filters 45, the focal distance of the micro lens sheet for three-dimensional look can be freely controlled by controlling the refractive index of the surface coating solution 61, and as the surfaces of the overlapping convex lenses 41 and 49 are planarized, surface polishing and surface strength can be freely controlled, and the volume of a three-dimensional image can be improved.

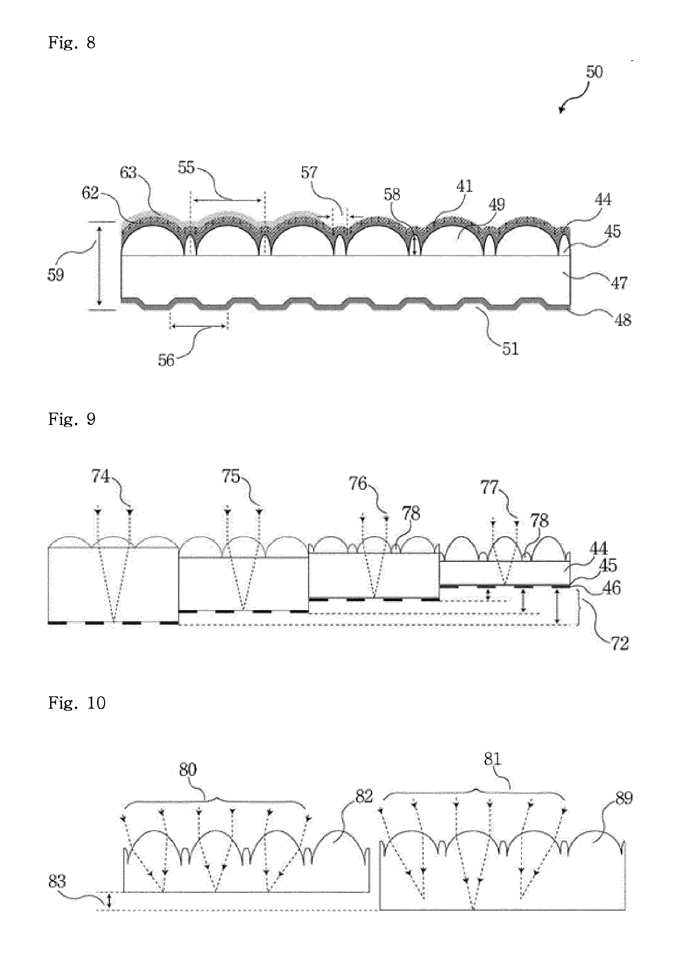

Referring to FIG. 8, a lens array sheet formed with a light transmission control filter of the fourth embodiment, a three-dimensional layer 51 has an embossing shape. While the three-dimensional patterns of the three-dimensional layer 52 of the first embodiment shown in FIG. 4 are formed through performing printing after the lens sheet is manufactured, the three-dimensional layer 51 of the fourth embodiment may be formed simultaneously when lens array layers 41 and 49 and the focal distance layers 47 and 48 are formed through extrusion. Due to this fact, additional advantages are provided in that a manufacturing procedure can be simplified.

As a result of experiments conducted by the inventors in relation to the fourth embodiment, it was found that an advantageous lens sheet with the thickness 59 of 205 microns is manufactured when the first convex lenses 41 and the first light transmission control filter layer 44 are formed of PET-G resin with a refractive index of 1.575, a lens arrangement angle is set to 45°, a radius of curvature is set to 75 microns, the width 57 of the first light transmission control filter layer 44 is set to 45 microns, the height of embossed portions 58 is set to 38 microns, and the second convex lenses 49 and the second light transmission control filters 45 are formed of A-PET resin with refractive index of 1.575. It was more preferable to print the embossing patterns of the three-dimensional layer 51 to have a size smaller by 1.7% than the pitch of the lenses.

As a result, due to the presence of the light transmission control filters 44 and 45 which are formed between the convex lenses 41 and 49, the convex lenses 41 and 49 of the fourth embodiment can be designed to have a radius of curvature of 75 microns that is smaller than 97 microns as a minimum radius of curvature of conventional spherical lenses, and it is possible to manufacture a micro lens array sheet for three-dimensional look which has the thickness 59 of a lens array sheet 50 corresponding to 205 microns and does not require a separate process for printing three-dimensional patterns.

It is to be noted that the concrete numerical values mentioned in the various embodiments are to compare the present disclosure provided with the light transmission control filters and the conventional art and explain the effects of the present invention, and therefore, are not intended to limit the scope of protection in the present invention.

Referring to FIG. 9, the leftmost part indicates when the size of the convex lenses is smaller than the radius of a hemispherical surface. The part next the leftmost part indicates that, when the size of the convex lenses corresponds to the radius of a hemispherical surface, the thickness of the lens sheet is decreased to be minimum.

The third part from the leftmost part indicates that the light transmission control filters are provided to the lens array layer of the embodiments and the thickness of the lens array sheet can be further decreased. The rightmost part indicates that convex lenses are designed in an aspherical shape of another embodiment and the thickness of the lens sheet can still further be decreased.

Referring to FIG. 10, in the case of hemispherical convex lenses 89, when aspherical convex lenses 82 are formed and a light transmission control filter layer 6 is formed, the thickness 19 of a three-dimensional lens sheet can be further decreased.

Referring to FIG. 11, the light transmission control filters 45 can have various sectional shapes such as of an oval 45, a triangle 85 and a polygon 86.

Referring to FIG. 12, the lens array sheet is constituted by the lens array layer (not numbered) in which the convex lenses 41 and 49 and the light transmission control filters 44 and 45 are repeatedly arrayed, the focal distance layers 47 and 48 which are formed under the lens array layers 41 and 49, and the three-dimensional layer 51 which is formed under the focal distance layers 47 and 48.

As is apparent from the above description, the present disclosure provides advantages in that a lens array sheet can be formed thinner than a conventional lens array sheet due to a presence of a light transmission control filter and a multilayered composite resin layer.

Also, the present disclosure provides advantages in that the clearness and volume of a three-dimensional image can be improved even when the three-dimensional image is viewed from any position in any direction.

Further, the present disclosure provides advantages in terms of printability after processing, dimensional stability, easy cutting, excellent adhesiveness, and formability.

Although embodiments have been described for illustrative purposes, those skilled in the art will appreciate that various modifications, additions and substitutions are possible, without departing from the scope of the accompanying claims.

**Claims**

1. A lens array sheet formed with a light transmission control filter, comprising:

   a lens array layer having a configuration in which convex lenses and light transmission control filters are repeatedly arrayed;
   a focal distance layer formed under the lens array layer; and
   a three-dimensional layer formed under the focal distance layer.

2. The lens array sheet according to claim 1, wherein the light transmission control filters have a size that is smaller than the convex lenses.

3. The lens array sheet according to claim 1, wherein the three-dimensional layer has patterns which are formed through printing.

4. The lens array sheet according to claim 1, wherein the three-dimensional layer is formed with embossing patterns when the lens array layer and the focal distance layer are simultaneously extruded.

5. The lens array sheet according to claim 3, wherein a pitch of the patterns formed through printing is smaller than a pitch of the convex lenses.

6. The lens array sheet according to claim 4, wherein a pitch of the embossing patterns is smaller than the pitch of the convex lenses.

7. The lens array sheet according to claim 1, wherein the light transmission control filters have oval spherical surfaces.

8. The lens array sheet according to claim 1, wherein the convex lenses have oval spherical surfaces.

9. The lens array sheet according to claim 1, wherein an adhesive surface coating agent is applied over the lens array layer.

10. The lens array sheet according to claim 9, wherein an adhesive surface coating agent is applied over the lens array layer and is planarized.

**11.** The lens array sheet according to claim 1, wherein a coating layer for absorbing ink is added over the lens array layer; and/or wherein the light transmission control filters have an aspherical, triangular or polygonal sectional shape.

**12.** The lens array sheet according to claim 1, wherein the focal distance layer is constituted by a first focal distance layer and a second focal distance layer which is formed under the first focal distance layer.

**13.** The lens array sheet according to claim 1, wherein the convex lenses of the lens array layer are constituted by first convex lenses and second convex lenses which are formed under the first convex lenses in such a way as to overlap with each other.

**14.** The lens array sheet according to claim 13, wherein a refractive index of the first convex lenses is equal to or larger than a refractive index of the second convex lenses.

**15.** The lens array sheet according to claim 1, wherein the light transmission control filters of the lens array layer are constituted by first light transmission control filters and second light transmission control filters which are formed under the first light transmission control filters in such a way as to overlap with each other; and/or wherein the light transmission control filters are formed in a continuous shape in such a way as not to have a pitch in one of longitudinal and transverse directions when viewed from the top.

Fig.1 (Prior Art)

Fig.2 (Prior Art)

Fig. 3 (Prior Art)

Fig. 4

Fig. 5

Fig. 6

Fig. 7

Fig. 8

Fig. 9

Fig. 10

Fig. 11

Fig. 12

Europäisches
Patentamt
European
Patent Office
Office européen
des brevets

# EUROPEAN SEARCH REPORT

Application Number

EP 11 18 9181

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JP 2010 243574 A (TOPPAN PRINTING CO LTD) 28 October 2010 (2010-10-28) * abstract; figure 2 * | 1-8, 13-15 | INV. G02B3/00 |
| X | GB 2 077 939 A (RICOH KK) 23 December 1981 (1981-12-23) * page 1, line 94 - page 2, line 1; figure 2 * | 1-11,13, 14 | |
| X | WO 2007/082781 A1 (FRAUNHOFER GES FORSCHUNG [DE]; DUPARRE JACQUES [DE]; DANNBERG PETER [D) 26 July 2007 (2007-07-26) * page 11, line 26 - page 12, line 16; figure 5 * * page 15, line 6 - line 17 * | 1-8, 12-14 | |
| X | US 6 373 635 B1 (FUJIMOTO HISAYOSHI [JP] ET AL) 16 April 2002 (2002-04-16) * column 3, line 53 - line 59 * * column 6, line 15 - line 25 * | 1-8,13, 14 | |
| X | JP 2008 250063 A (TOPPAN PRINTING CO LTD) 16 October 2008 (2008-10-16) * abstract; figure 1 * * paragraph [0020] * | 1-8, 13-15 | TECHNICAL FIELDS SEARCHED (IPC) G02B |
| A | WO 2010/057832 A1 (ROLLING OPTICS AB [SE]; LUNDVALL AXEL [SE]) 27 May 2010 (2010-05-27) * page 5, line 5 - page 6, line 3; claim 1; figure 2 * * page 10, line 21 - line 24 * | 3-6 | |
| A | US 5 581 379 A (AOYAMA SHIGERU [JP] ET AL) 3 December 1996 (1996-12-03) * column 7, line 30 - line 47; figure 2 * | 7,11 | |

-/--

The present search report has been drawn up for all claims

| Place of search | Date of completion of the search | Examiner |
|---|---|---|
| Berlin | 19 January 2012 | Verdrager, Véronique |

EPO FORM 1503 03.82 (P04C01)

Europäisches
Patentamt

European
Patent Office

Office européen
des brevets

# EUROPEAN SEARCH REPORT

Application Number

EP 11 18 9181

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2002/145797 A1 (SALES TASSO R M [US]) 10 October 2002 (2002-10-10) * paragraph [0079]; figures 2,21 * ----- | 8 | |
| A | EP 1 251 365 A1 (MATSUSHITA ELECTRIC IND CO LTD [JP]) 23 October 2002 (2002-10-23) * paragraph [0072]; figure 11(c) * ----- | 13,14 | |

TECHNICAL FIELDS
SEARCHED      (IPC)

The present search report has been drawn up for all claims

| Place of search | Date of completion of the search | Examiner |
|---|---|---|
| Berlin | 19 January 2012 | Verdrager, Véronique |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

**ANNEX TO THE EUROPEAN SEARCH REPORT
ON EUROPEAN PATENT APPLICATION NO.**

EP 11 18 9181

This annex lists the patent family members relating to the patent documents cited in the above-mentioned European search report.
The members are as contained in the European Patent Office EDP file on
The European Patent Office is in no way liable for these particulars which are merely given for the purpose of information.

19-01-2012

| Patent document cited in search report | | Publication date | Patent family member(s) | | Publication date |
|---|---|---|---|---|---|
| JP 2010243574 | A | 28-10-2010 | NONE | | |
| GB 2077939 | A | 23-12-1981 | DE | 3123928 A1 | 25-02-1982 |
| | | | GB | 2077939 A | 23-12-1981 |
| | | | JP | 57008502 A | 16-01-1982 |
| WO 2007082781 | A1 | 26-07-2007 | AT | 523802 T | 15-09-2011 |
| | | | DE | 102006004802 A1 | 02-08-2007 |
| | | | EP | 1979769 A1 | 15-10-2008 |
| | | | JP | 2009524263 A | 25-06-2009 |
| | | | KR | 20080089604 A | 07-10-2008 |
| | | | US | 2009179142 A1 | 16-07-2009 |
| | | | WO | 2007082781 A1 | 26-07-2007 |
| US 6373635 | B1 | 16-04-2002 | CN | 1287276 A | 14-03-2001 |
| | | | DE | 10046297 A1 | 21-02-2002 |
| | | | JP | 4131891 B2 | 13-08-2008 |
| | | | JP | 2001074914 A | 23-03-2001 |
| | | | US | 6373635 B1 | 16-04-2002 |
| JP 2008250063 | A | 16-10-2008 | NONE | | |
| WO 2010057832 | A1 | 27-05-2010 | EP | 2359181 A1 | 24-08-2011 |
| | | | US | 2011233918 A1 | 29-09-2011 |
| | | | WO | 2010057832 A1 | 27-05-2010 |
| US 5581379 | A | 03-12-1996 | NONE | | |
| US 2002145797 | A1 | 10-10-2002 | NONE | | |
| EP 1251365 | A1 | 23-10-2002 | DE | 60200225 D1 | 01-04-2004 |
| | | | DE | 60200225 T2 | 15-07-2004 |
| | | | EP | 1251365 A1 | 23-10-2002 |
| | | | US | 2002196563 A1 | 26-12-2002 |

EPO FORM P0459

For more details about this annex : see Official Journal of the European Patent Office, No. 12/82